# EUROPÄISCHE PATENTSCHRIFT

(11) **EP 1 969 355 B1**
(45) Veröffentlichungstag und Bekanntmachung des Hinweises auf die Patenterteilung: **11.04.2012**
(21) Anmeldenummer: 06829625.0
(22) Anmeldetag: 14.12.2006
(51) Int. Cl.: G01N 21/88, G01N 21/91, G01N 21/89, G01B 11/30, G02B 5/28, G01B 13/22, G01B 11/06, G01N 21/64

(54) **VERFAHREN UND ANORDNUNG ZUR ERKENNUNG VON MATERIALFEHLERN IN WERKSTÜCKEN**
METHOD AND ARRANGEMENT FOR DETECTING MATERIAL DEFECTS IN WORKPIECES
PROCEDE ET SYSTEME DE DETECTION DE DEFAUTS DE MATERIAU DANS DES PIECES

(30) Priorität: 16.12.2005 DE 102005060735; 24.03.2006 DE 102006013655
(43) Veröffentlichungstag der Anmeldung: 17.09.2008
(73) Patentinhaber: Automation W+R GmbH, 80992 München (DE)
(72) Erfinder: CLASEN, Ralf, 80807 München (DE)
(74) Vertreter: Kesselhut, Wolf
(86) Internationale Anmeldenummer: PCT/EP2006/012074
(87) Internationale Veröffentlichungsnummer: WO 2007/073879

(56) Entgegenhaltungen:
- EP-A- 0 282 627
- EP-A1- 0 666 474
- WO-A-02/20696
- GB-A- 2 222 879
- JP-A- 2000 258 398
- US-A- 5 115 136
- US-B1- 6 697 514
- "FILTER ENHANCES FLUORESCENT-PENETRANT-INSPECTING BORESCOPE" NTIS TECH NOTES, US DEPARTMENT OF COMMERCE. SPRINGFIELD, VA, US, 1. Juli 1990 (1990-07-01), Seite 582, XP000149194 ISSN: 0889-8464

## Beschreibung

Die Erfindung betrifft ein Verfahren und eine Anordnung zur Erkennung von Materialfehlern in Werkstücken gemäß dem Oberbegriff von Anspruch 1 und 6.

Auf dem Gebiet der Werkstoffprüfung werden zur optischen Ermittlung von Beschädigungen und Rissen in Werkstücken Verfahren eingesetzt, bei denen die Werkstücke mit einer Farbstoffpartikel enthaltenen Lösung oder einem Pulver beaufschlagt und anschließend durch eine Beleuchtungseinrichtung, insbesondere in Form einer UV-Lampe, mit kurzwelligem Licht bestrahlt werden.

Durch die Bestrahlung mit kurzwelligem Licht werden die Farbpigmente zur Emission von Fluoreszenz- oder Phosphoreszenzlicht angeregt, welches entweder visuell durch das Auge eines Beobachters oder mit Hilfe von Kameras detektiert wird, die mit einer elektronischen Auswerteinrichtung gekoppelt sind, welche aus den aufgenommenen Lichtintensitäten Materialfehler, insbesondere Risse, ermittelt, an denen sich die Farbpartikel bevorzugt anlagern.

Hierbei kann es bei magnetisierbaren Prüflingen zur Verbesserung des Kontrasts vorgesehen sein, dass die Farbpigmente an magnetisierbare Partikel gebunden sind, wie beispielsweise an Magnetpulver oder Eisenspäne, um durch Anlegen eines externen Magnetfeldes an die Werkstücke eine infolge der entstehenden Streufelder verstärkte Anlagerung der Farbpigmente im Bereich von Rissen zu erhalten.

Ein grundsätzliches Problem bei der visuellen Prüfung von Werkstücken nach den zuvor beschriebenen Verfahren besteht darin, dass es durch den zwangsweisen Einsatz von kurzwelligem Licht im UV-Bereich in der Regel nicht nur zu einer hohen Belastung des menschlichen Auges kommt, sondern dass im Falle eines direkten Kontakts mit der kurzwelligen Strahlung auch Schädigungen der Haut sowie von anderen Organen auftreten können, wobei sich das Risiko hierfür insbesondere stark erhöht, wenn die Intensität des anregenden UV-Lichts vergrößert wird, um auch bei kleinen Rissen einen ausreichend großen Kontrast zu erhalten, der deren visuelle Erkennung durch das menschliche Auge eines Beobachters überhaupt erst ermöglicht.

Ein solcher hoher Kontrast zwischen Rissen und unbeschädigten Oberflächenteilen eines Werkstücks ist jedoch für eine fehlerfreie visuelle Sichtprüfung zwangsweise erforderlich, da nur hierdurch ein ermüdungsfreies Arbeiten auch über einen längeren Zeitraum hinweg überhaupt erst ermöglicht wird.

Aus dem genannten Grund eignen sich beispielsweise Blitzlampen, die häufig bei einer automatischen Werkstückprüfung eingesetzt werden in der Regel nicht für die visuelle Prüfung der Werkstücke, da die stark schwankenden Lichtintensitäten der Blitzlampen in Verbindung mit der Trägheit des menschlichen Auges zu einer Blendwirkung führen, welche die Möglichkeit zum Erkennen von Fehlern in einem Werkstück ausschließt.

Die GB-A-2 222 879 beschreibt ein Verfahren zur Erkennung von Materialfehlern in einem Werkstück, wobei das Werkstück mit einem Prüfmittel beaufschlagt wird, welches Farbpigmente enthält, die durch kurzwelliges Licht anregbar sind. Das Werkstück wird mit kurzwelligem Licht einer Lichtquelle bestrahlt, und das vom Werkstück emittierte Licht durch einen Detektor erfasst, dessen Signale durch eine elektronische Auswerteinrichtung zur Ermittlung der Materialfehler ausgewertet werden. Der Lichtquelle ist hierbei ein erster optischer Interferenzfilter zugeordnet, der das von der Lichtquelle ausgesandte Licht vor dem Auftreffen auf das Werkstück nach Art eines Bandpasses selektiert.

Weiterhin offenbart die EP-A-0 282 627 ein Verfahren zur zerstörungsfreien Rissprüfung von Werkstücken nach dem Magnetpulver- bzw. Farbeindringverfahren, bei welchem Magnet- oder Farbeindringteilchen mit oder ohne Zusatzmittel in Form von fluoreszierenden Pulvern oder wässrigen Suspensionen auf die Werkstückoberflächen aufgebracht werden, die im Falle der Magnetpulverprüfung magnetisiert und durch eine Leuchte als anregende Lichtquelle mit vorbestimmter Spektralamplitude beleuchtet werden. Das von einem Oberflächenbereich des Prüflings abgestrahlte Licht wird anschließend ausgewertet und durch eine Sichtprüfung beurteilt. Das eingesetzte Licht besitzt eine Wellenlänge im Spektralbereich von 400-500 nm.

Aus der US-B1-6 697 514 ist weiterhin eine UV-Lichtquelle bekannt, die Licht in einem Wellenlängenbereich von 220-240 nm emittiert.

Ferner beschreibt die US 2002 093 649A1 eine Leuchte für die zerstörungsfreie Werkstoffprüfung, bei der eine Vielzahl von matrixförmig angeordneten Leuchtdioden zum Einsatz gelangen, die bevorzugt ultraviolettes Licht abstrahlen.

Aus der DE 299 022 18 U1 ist ein Verfahren der zuvor beschriebenen Art bekannt, bei welchem zur Beleuchtung der Prüflinge bekannte Leuchtdioden (LEDs) eingesetzt werden, die Licht mit einer Wellenlänge im Bereich zwischen 200 nm und 970 nm emittieren. Obgleich der Einsatz von LEDs gegenüber den sonst üblicherweise eingesetzten UV-Blitzlampen eine deutliche Verlängerung der Lebensdauer der Beleuchtungseinrichtung mit sich bringt, weist das von den LEDs erzeugte UV-Licht einen vergleichsweise großen Spektralbereich und eine geringe Intensität auf, so dass sich im Vergleich zu UV-Blitzlampen ein geringer Kontrast ergibt, wodurch Risse in nicht homogenen Werkstückoberflächen nur schwer erkennbar sind, was die Fehlerquote bei einer automatischen Rissprüfung von bewegten Werkstücken drastisch erhöht.

Aus der DE 10 2004 043 295 B4 ist eine Handleuchte für die zerstörungsfreie Werkstoffprüfung bekannt, bei der eine Vielzahl von UV-Leuchtdioden zum Einsatz gelangen, die matrixartig in einem Gehäuse untergebracht sind und UV-Licht mit einer Wellenlänge von 380nm abstrahlen. Um die Leuchtdioden vor einer Beschädigung von außen zu schützen, wird vorgeschlagen, das Vorderteil des Gehäuses mit einem Schutzglas auszurüsten, welches als Filterglas für bestimmte Wellenlängen ausgebildet sein kann.

Demgemäß ist es eine Aufgabe der Erfindung, ein Verfahren und eine Anordnung zu schaffen, mit denen sich auch Materialfehler auf inhomogenen Werkstückoberflächen mit hoher Zuverlässigkeit erkennen lassen.

Diese Aufgabe wird erfindungsgemäß durch die Merkmale von Anspruch 1 und 6 gelöst.

Weitere Merkmale der Erfindung sind in den Unteransprüchen enthalten.

Gemäß der Erfindung wird bei einem Verfahren zur automatischen Erkennung von Materialfehlern, insbesondere von Rissen in oder an Werkstücken, die zuvor mit einem Prüfmittel, insbesondere einer Prüflösung, mit darin enthaltenen Farbpigmenten besprüht oder in diese eingetaucht wurden und bei denen das Werkstück anschließend mit kurzwelligem Licht, insbesondere mit Licht einer UV- oder einer blauen Lichtquelle bestrahlt wird, das vom Werkstück emitierte Licht durch einen Detektor erfasst und die Signale des Detektors durch eine elektronische Auswerteinrichtung zur Ermittlung der Materialfehler ausgewertet. Die Farbpigmente sind hierbei bevorzugt fluoreszierende oder phosphoreszierende Substanzen, die in den gewünschten Wellenlängenbereichen beispielsweise unter der Bezeichnung "Lumogen Gelb" von der BASF AG in Ludwigshafen, Deutschland, vertrieben werden.

Die Werkstücke können hierbei insbesondere auch einem Magnetfeld ausgesetzt sein, wobei die Lösung in diesem Falle an die Farbstoffpigmente gebundene magnetische oder magnetisierbare Partikel wie beispielsweise Eisenpartikel enthält, die sich nach Anlegen des magnetischen Feldes an den Kanten von Rissen in erhöhter Konzentration anlagern. Durch Bestrahlen mit kurzwelligem Licht emittieren die Farbpartikel Fluoreszenzlicht, wodurch die Risse für einen Betrachter in Form von Rissraupen sichtbar werden.

Die Farbpigmente sind bei der bevorzugten Ausführungsform der Erfindung bevorzugt durch Licht in einem Wellenlängenbereich zwischen 300 nm und 480 nm anregbar, wobei die Lichtquelle das Licht bevorzugt in einem Wellenlängenbereich zwischen 460 nm und 490 nm erzeugt.

Gemäß der Erfindung ist der Lichtquelle zur Erhöhung des Kontrastes ein erster optischer Interferenzfilter zugeordnet, welcher das von der Lichtquelle ausgesandte, bevorzugt blaue Licht, vor dem Auftreffen auf das Werkstück nach Art eines Bandpasses selektiert.

Der erste optische Interferenzfilter besitzt dabei einen Transmissionsbereich, d. h. einen Bereich, in dem das Licht einer vorgegebenen Wellenlänge den Filter nahezu ungehindert passieren kann, der zwischen 380 nm und 480 nm liegt. Die Transmission oder der Transmissionsgrad des optischen Interferenzfilters im Durchlassbereich liegt hierbei vorzugsweise oberhalb von 90 %, besonders bevorzugt sogar oberhalb von 98 %.

Nach einem weiteren der Erfindung zugrundeliegenden Gedanken ist dem Detektor ein zweiter optischer Interferenzfilter zugeordnet, welcher das vom Werkstück emittierte Fluoreszenz- oder Phosphoreszenzlicht vor seinem Auftreffen auf den Detektor nach Art eines Bandpasses wellenlängenspezifisch selektiert.

Obgleich die zuvor genannten Wellenlängenbereiche des ersten Filters sowie der Absorptionsbereich der Farbpigmente auch anders gewählt oder verschoben sein können, wird insbesondere in Kombination mit den Wellenlängenbereichen für die Anregbarkeit der Farbpigmente (300 nm - 480 nm) und dem Wellenlängenbereich für die Lichtquelle (460 nm - 490 nm) sowie dem Transmissionsbereich des ersten optischen Interferenzfilters (380 nm - 480 nm) ein zweiter Interferenzfilter gewählt, der einen Transmissionsbereich für das eingestrahlte Licht zwischen 500 nm und 580 nm besitzt.

In Kombination mit Farbpigmenten, die nach ihrer Anregung Fluoreszenzlicht oder Phosphoreszenzlicht im Bereich zwischen 500 nm und 600 nm emittieren, konnte von der Anmelderin in überraschender Weise ein besonders hoher Kontrast beobachtet werden, der eine automatisierte Erkennung von kleinsten Rissen oder sonstigen Beschädigungen auf Oberflächen von kontinuierlich bewegten Werkstücken in der Praxis überhaupt erst ermöglicht.

Hierbei wurde weiterhin in überraschender Weise gefunden, dass durch die zusätzliche Beschneidung des Anregespektrums durch den ersten optischen Interferenzfilter, welcher einen sehr steilflankigen Absorptionsbereich zwischen insbesondere 380 nm und 480 nm aufweist, gegenüber einer vergleichbaren Vorrichtung, bei der ein solcher Filter nicht zum Einsatz gelangt, ein zusätzlicher Kontrastgewinn zu beobachten ist, der dadurch noch gesteigert werden kann, dass als Lichtquelle eine schmalbandige LED zum Einsatz gelangt, die im Bereich zwischen 460 nm und 490 nm bläuliches Licht abstrahlt.

Der erste und bevorzugt auch der zweite Interferenzfilter bestehen aus mehreren dünnen Schichten eines dielektrischen transparenten Materials wie z.B. Glimmer oder geeignete Polymere, die im Hochvakuum auf ein geeignetes Substrat, wie insbesondere einen Glasträger, aufgedampft werden. Durch die an den Grenzflächen zweier aneinandergrenzender Schichten erfolgenden Reflexionen eines einfallenden Lichtstrahls und der sich anschließenden Überlagerung der reflektierten Wellen kommt es zu Interferenzerscheinungen, durch die in Abhängigkeit von der Dicke der dünnen Schichten Licht eines bestimmten Wellenlängenbereichs durch eine destruktive Überlagerung ausgelöscht wird, wohingegen Licht mit einer Wellenlänge im Transmissionsbereich des Filters nahezu ungehindert durch diesen hindurchgelangt.

Gemäß einem weiteren der Erfindung zugrundeliegenden Gedanken lässt sich die Erkennungsrate von Rissen und Oberflächenfehlern bei bewegten Werkstücken, wie z.B. Werkstück-Rohlingen in einer Gießerei, dadurch weiter erhöhen, dass als Lichtquelle eine Vielzahl von nach Art einer Matrix oder eines Arrays in einer Ebene angeordneten Halbleiter-LEDs zur Beleuchtung des Werkstücks eingesetzt werden, deren bläuliches Licht mit einer Wellenlänge im Bereich zwischen 460 nm und 490 nm im Wesentlichen parallel in Richtung zum Werkstück hin abgestrahlt wird. Obgleich hierbei jeder LED ein eigener erster optischer Interferenzfilter zugeordnet sein kann, kommt bevorzugt ein gemeinsamer Interferenzfilter für die gesamte Dioden-Matrix von beispielsweise 4x4-LEDs zum Einsatz.

Zur weiteren Erhöhung der Lichtintensität können zudem auch mehrere Lichtquellen in Form von Dioden-Arrays vorgesehen sein, die das Werkstück während seiner Bewegung kontinuierlich von mehreren Seiten und ggf. überlagernd bestrahlen.

Obgleich als Lichtquelle beispielsweise ebenfalls eine aus dem Stand der Technik bekannte UV-Blitzlampe mit einem entsprechenden Spektrum einsetzbar ist, wird bei der bevorzugten Ausführungsform der Erfindung die Lichtquelle in Form der LEDs bevorzugt kontinuierlich betrieben, wodurch sich der zusätzliche Vorteil ergibt, dass bei der Aufnahme von bewegten Werkstücken keine Synchronisation der Werkstückbewegung mit der Lichtquelle erforderlich ist.

Wie von der Anmelderin dabei beobachtet werden konnte, wird insbesondere beim Einsatz von nach Art einer Matrix angeordneten LEDs trotz der gegenüber UV-Blitzlampen deutlich reduzierten Strahlungsintensität aufgrund der Überlagerung der Lichtintensitäten der einzelnen LEDs einer Matrix und der in einem großen Raumwinkelbereich im Wesentlichen parallelen Abstrahlung der Lichtwellen eine so hohe Intensität erhalten, dass selbst bei kontinuierlich bewegten Werkstücken in Kombination mit einer kontinuierlich betriebenen Lichtquelle eine hinreichend starke Anregung der Farbpigmente durch die Lichtquelle erfolgt, durch die die Intensität des zu einer größeren Wellenlänge hin verschobenen Fluoreszenz- oder Phosphoreszenzlichtes trotz des zwischengeschalteten ersten und/oder zweiten Interferenzfilters im nachgeordneten Detektor zu Signalen führt, die unter Anwendung bekannter Bildverarbeitungsverfahren eine zuverlässige Erkennung von kleinen Rissen, ermöglicht, welche eine Rissbreite von beispielsweise 20 µm bei einer Geschwindigkeit des Werkstücks von beispielsweise 1 m/s besitzen können.

Nach der Erfindung ist der Detektor als eine CCD-Zeilenkamera mit wenigstens einer CCD-Zeile ausgestaltet, wobei das Auslesen der lichtempfindlichen Zellen der CCD-Zeile bei einer kontinuierlichen Bewegung des Werkstücks bevorzugt mit einer Geschwindigkeit erfolgt, die proportional zur Geschwindigkeit des Werkstücks ist.

Die CCD-Zeilenkamera besitzt in Bewegungsrichtung des Werkstücks betrachtet wenigstens zwei, bevorzugt jedoch 64 oder mehr nebeneinander liegende CCD-Zeilen, bei denen zwei benachbarte nebeneinander liegende lichtempfindliche Zellen - nachfolgend als korrespondierende lichtempfindliche Zellen bezeichnet - nacheinander entlang einer Achse angeordnet sind, die bevorzugt als eine sich parallel zur Bewegungsrichtung des Werkstücks erstreckende Gerade ausgestaltet ist, wenn das Werkstück geradlinig bewegt wird.

Um die Erkennungsrate weiter zu erhöhen, ist es vorgesehen, dass die aus den zueinander korrespondierenden lichtempfindlichen Zellen der CCD-Zeilen ausgelesenen Signalwerte addiert werden, was beispielsweise in digitaler Form durch eine entsprechende Abspeicherung und Addition der Signalwerte in der elektronischen Auswerteinrichtung mit Hilfe eines Mikroprozessors erfolgen kann. Ebenso ist es jedoch denkbar, die Signale zweier oder mehrerer korrespondierender lichtempfindlicher Zellen auf elektronischem Wege durch den Einsatz bekannter elektronischer Bauteile zu addieren, wenn diese mit einer der Werkstück-Geschwindigkeit entsprechenden Geschwindigkeit ausgelesen werden. Hierdurch ergibt sich oder Vorteil, dass die Intensität des von einem Riss emittierten Fluoreszenzlichtes von jeder der korrespondierenden Zellen bei der Vorbeibewegung des Werkstücks nacheinander registriert wird und dort einen der eingefallenen Intensität des emittierten Lichts entsprechenden Signalwert erzeugt. Obgleich die Größe des Signalwerts einer einzelnen Zelle bei kleinen Rissen mitunter nicht ausreicht, einen Riss einwandfrei zu identifizierten, wird durch die erfindungsgemäße Addition der Signalwerte mehrerer oder aller korrespondierender lichtempfindlicher Zellen, die auf einer parallel zur Bewegungsrichtung des Werkstücks verlaufenden Achse angeordnet sind, der aufintegrierte Signalwert um einen Faktor erhöht, der bei einer konstanten Lichtintensität im Wesentlichen der Anzahl der korrespondierenden lichtempfindlichen Zellen entspricht.

Hierdurch wird die Möglichkeit geschaffen, selbst bei sehr schwachen Lichtsignalen, beziehungsweise bei hohen Werkstückgeschwindigkeiten und einer konstanten Beleuchtung mit vergleichsweise niedriger Intensität durch eine entsprechende Vergrößerung der Anzahl der CCD-Zeilen eine zur zuverlässigen Erkennung von Rissen erforderliche Signalhöhe zu erhalten.

Das erfindungsgemäße Verfahren und die zugehörige Anordnung zur automatischen Erkennung von Materialfehlern in insbesondere kontinuierlich bewegten Werkstücken werden nachfolgend mit Bezug auf die Zeichnungen beschrieben.

In den Zeichnungen zeigen:
- Fig. 1: eine schematische Darstellung der erfindungsgemäßen Anordnung mit insgesamt 3 Lichtquellen und 2 Detektoren, die über einen Winkelbereich von ca. 160° um ein Werkstück herum angeordnet sind, welches sich aus der Zeichenebene heraus, bzw. in diese hinein, bewegt,
- Fig. 2: eine schematische räumliche Darstellung eines als CCD-Zeilenkamera mit mehreren nebeneinander liegenden CCD-Zeilen ausgestalteten erfindungsgemäßen Detektors bei der Erfassung eines mit kontinuierlicher Geschwindigkeit am Detektor vorbeibewegten Werkstücks.

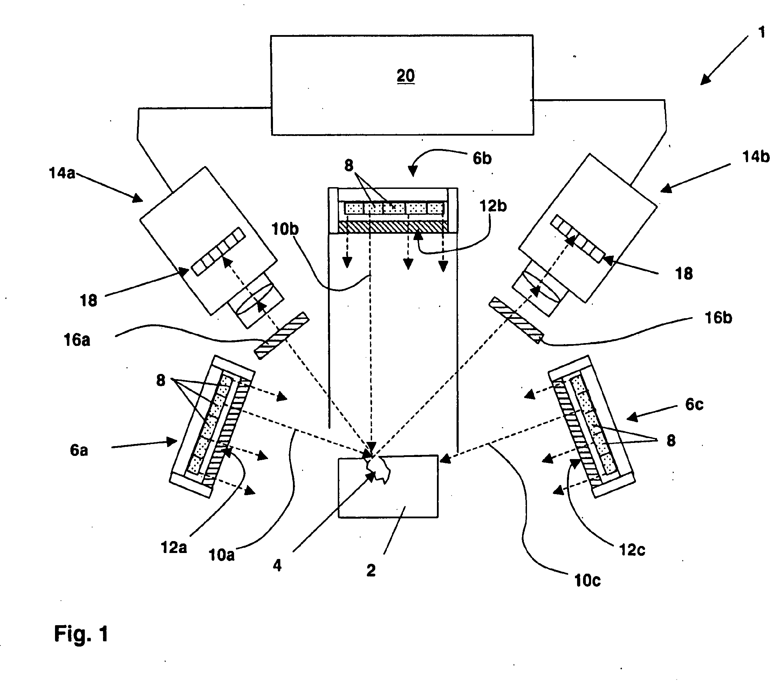

Fig. 1 zeigt eine erfindungsgemäße Anordnung 1 zur automatischen Erkennung von Materialfehlern in einem Werkstück 2, welche insbesondere als Risse 4 auftreten, die in den Zeichnungen aus darstellungstechnischen Gründen deutlich vergrößert dargestellt sind.

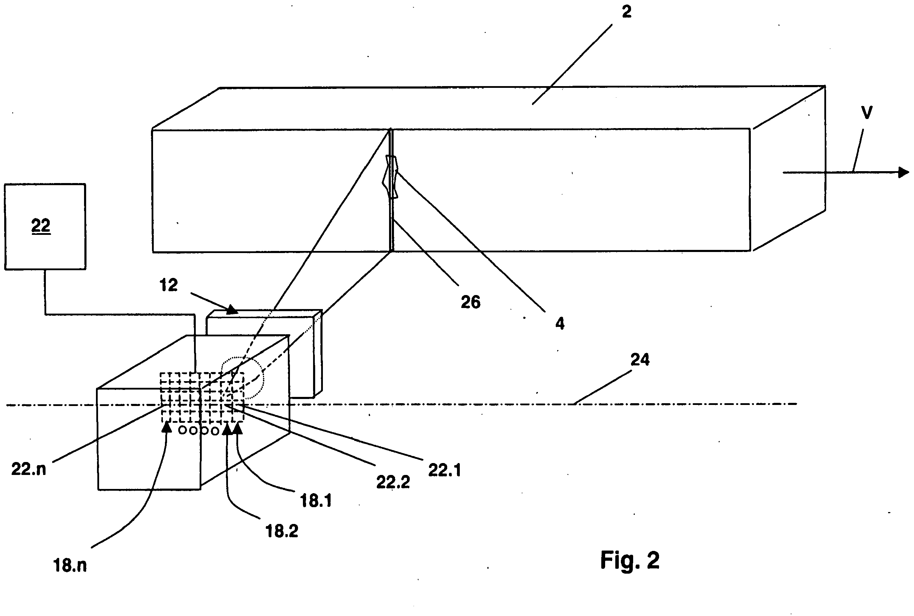

Das oder die Werkstücke 2 werden dabei durch ein nicht dargestelltes Transportmittel, wie einem Greifer oder ein Förderband, mit einer konstanten Geschwindigkeit transportiert, die beim Werkstück 2 in Fig. 2 durch den Pfeil V angedeutet ist. Die Bewegungsrichtung des Werkstücks 2 verläuft in Fig. 1 in die Zeichenebene hinein, bzw. aus dieser heraus.

Das Werkstück 2 wurde zuvor in bekannter Weise mit einer Lösung beaufschlagt - beispielsweise in diese eingetaucht oder mit dieser besprüht -, welche fluoreszierende oder phosphoreszierende Farbpigmente enthält, die durch kurzwelliges Licht, beispielsweise blaues Licht oder UV-Licht anregbar sind, und das eingestrahlte Licht ihrerseits wieder als langwelligeres Fluoreszenz- oder Phosphoreszenzlicht emittieren.

Die Farbpartikel lagern sich dabei bevorzugt in Rissen 4 der Werkstücke 2 an, und werden bei einer Bestrahlung mit kurzwelligem Licht in bekannter Weise als Rissraupen sichtbar.

Bei der in Fig. 1 gezeigten erfindungsgemäßen Anordnung 1 wird das kurzwellige Licht bevorzugt durch drei Lichtquellen 6a, 6b und 6c erzeugt, die jeweils eine Vielzahl von LEDs 8 umfassen, die bevorzugt nach Art einer Matrix plan in einer Ebene angeordnet sind und ihr Licht in Form von Lichtstrahlen 10a, 10b und 10c in Richtung zum Werkstück 2 hin abstrahlen.

Zwischen den Lichtquellen 6a, 6b und 6c und dem Werkstück 2 ist in erfindungsgemäßer Weise jeweils ein erster optischer Interferenzfilter 12a, 12b und 12c angeordnet, welcher das von den Lichtquellen 6a, 6b und 6c ausgesandte Licht 10a, 10b und 10c vor dem Auftreffen auf das Werkstück 2 nach Art eines Bandpasses selektiert.

Die erfindungsgemäße Anordnung 1 umfasst weiterhin einen optischen Detektor 14, der gemäß der Ausführungsform von Fig. 1 eine erste CCD-Zeilenkamera 14a und eine zweite CCD-Zeilenkamera 14b enthält, die bezogen auf die Bewegungsrichtung des Werkstücks 2 bevorzugt in der selben Ebene wie die Lichtquellen 6a, 6b, 6c und jeweils zwischen zwei der Lichtquellen angeordnet sind, wie dies in Fig. 1 angedeutet ist. Durch diese wechselweise räumliche Anordnung von Lichtquellen 6a, 6b, 6c und Detektoren 14a, 14b entlang eines Halbbogens oder Kreisbogens um das Werkstück 2 herum ergibt sich eine besonders kompakte Bauform und eine Reduzierung von störenden Lichtreflexen, die insbesondere durch Licht hervorgerufen werden, das direkt von einer Lichtquelle 6 in die Detektoren/Kameras 14 eingestrahlt wird.

Wie den Darstellungen von Fig. 1 und Fig. 2 weiterhin entnommen werden kann, befindet sich vor den CCD-Zeilenkameras 14a, 14b jeweils ein zweiter optischer Interferenzfilter 16a, 16b, der das von den Farbpigmenten im Bereich des Risses 4 emittierte Licht vor dem Auftreffen auf die jeweilige CCD-Zeile 18.1, 18.2 bis 18.n der betreffenden CCD-Zeilenkamera 14a, 14b nach Art eines Bandpasses wellenlängenselektiv filtert.

Bei der bevorzugten Ausführungsform der Erfindung liegt der Wellenlängenbereich des Lichts, mit welchem die Farbpigmente zur Fluoreszenz bzw. Phosphoreszenz angeregt werden, bevorzugt bei 300 nm bis 480 nm, und das die Farbpigmente anregende Licht der Hochleistungs-LEDs 8 besitzt ein vorzugsweise glockenförmiges Spektrum in einem Wellenlängenbereich zwischen 460 nm und 490 nm, mit einem Intensitätsmaximum bei ca. 470 nm. Hierbei weist der erste optische Interferenzfilter 12a, 12b, 12c bevorzugt einen Transmissionsbereich zwischen 380 nm und 480 nm auf.

Anders ausgedrückt liegt der Transmissionsbereich des ersten optischen Interferenzfilters 12a, 12b, 12c im Bereich des langwelligen Endes des Anregungsspektrums der Farbpigmente, wobei die obere Grenze von Transmissionsbereich und Anregungsspektrum im Wesentlichen gleich ist. Gleichzeitig wird erfindungsgemäß durch die Hochleistungs-LEDs 8 kurzwelliges, insbesondere blaues Licht mit einem sehr schmalbandigen Wellenlängenbereich eingestrahlt, welcher die obere Grenzwellenlänge (480 nm) des Transmissionsbereichs des ersten Interferenzfilters sowie des Anregungsspektrums in etwa zur Hälfte überdeckt, wobei das Intensitätsmaximum (470 nm) des eingestrahlten Lichts 10a, 1b, 10c nahe der zuvor genannten Grenzwellenlänge (480 nm) jedoch noch unterhalb von dieser liegt.

Wie in Fig. 1 weiterhin gezeigt ist, sind die beiden CCD-Zeilenkameras 14a und 14b mit einer elektronischen Auswerteinrichtung 20 verbunden, welche die Signale der CCD-Zeilen 18a, 18b bevorzugt mit einer Geschwindigkeit ausliest, die im Wesentlichen proportional zur Geschwindigkeit V des Werkstücks 2 ist. Die Auswerteinheit 20, die in bekannter Weise einen Mikroprozessor und Speicher umfasst, bestimmt aus den jeweiligen Signalwerten der lichtempfindlichen Zellen 22.1 bis 22.n der CCD-Zeilen 18 der Kameras 14a, 14b auf der Basis von bekannten optischen Bildverarbeitungsverfahren das Vorliegen eines Risses 4 im Werkstück 2.

Gemäß der Darstellung von Fig. 2 sind in jeder CCD-Zeilenkamera 14a, 14b bevorzugt mehrere, z.B. 64 CCD-Zeilen 18 auf einem bekannten CCD-Chips angeordnet, wobei benachbart nebeneinander liegende lichtempfindliche Zellen 22.1, 22.2 ... 22.n entlang einer Achse 24 angeordnet sind, die im Wesentlichen parallel zur Bewegungsrichtung V des Werkstücks 2 verläuft.

Um die Erkennungsrate von Rissen 4 auch bei einer kontinuierlichen Beleuchtung des Werkstücks 2 mit Licht niedriger Intensität auf das erforderliche Maß zu erhöhen, werden die zu der jeweils eingefallenen Lichtmenge korrespondierenden Signalwert zweier benachbarter lichtempfindlicher Zellen 22.1, 22.2 ... 22.n nach dem Auslesen der Zellen durch die elektronische Auswerteinheit 20 miteinander addiert, wodurch bei einer zur Geschwindigkeit V des Werkstücks 2 proportionalen Auslesegeschwindigkeit der benachbarten CCD-Zeilen 18.1, 18.2 ... 18.n der in Fig. 2 gezeigte streifenförmige Bereich 26 fortschreitend nacheinander auf jeder der CCD-Zeilen 18.1, 18.2 ... 18.n abgebildet wird.

Anders ausgedrückt wird durch das Aufsummieren der Signalwerte der korrespondierenden lichtempfindlichen Zellen 22.1, 22.2 ... 22.n mit einer zur Werkstückgeschwindigkeit V proportionalen Geschwindigkeit ein statisches Abbild des vorbeibewegten Werkstücks 2 auf den CCD-Zeilen 18 erzeugt, wodurch sich die Möglichkeit eröffnet, die Menge des von den lichtempfindlichen Zellen erfassten Fluoressenzlichts aufzuintegrieren, um die Auflösung der erfindungsgemäßen Anordnung 1 zu erhöhen.

## Patentansprüche

1. Verfahren zur Erkennung von Materialfehlern, insbesondere Rissen (4), in einem Werkstück (2), wobei das Werkstück (2) mit einem Prüfmittel beaufschlagt wird, welches Farbpigmente enthält, die durch kurzwelliger Licht (10) anregbar sind, das Werkstück (2) anschließend mit kurzwelligem Licht einer Lichtquelle (6) bestrahlt und das vom Werkstück (2) emittierte Licht durch einen Detektor (14) erfasst wird, der eine CCD-Zeilenkamera (14a, 14b) mit wenigsten einer CCD-Zeile (18) umfasst und die Signale des Detektors (14) durch eine elektronische Auswerteinrichtung (20) zur Ermittlung der Materialfehler ausgewertet werden, wobei der Lichtquelle (6) ein erster optischer Interferenzfilter (12) zugeordnet ist, welcher das von der Lichtquelle (6) ausgesandte Licht (10) vor dem Auftreffen auf das Werkstück (2) nach Art eines Bandpasses selektiert,
**dadurch gekennzeichnet, dass**
die Lichtquelle (6) mehrere nach Art einer Matrix angeordnete LEDs (8) umfasst, die bläuliches Licht (10) bevorzugt in einem Wellenlängenbereich zwischen 460 nm und 490 nm emittieren, dass dem Detektor (14) ein zweiter optischer Interferenzfilter (16) zugeordnet ist, welcher das vom Werkstück (2) emittierte Licht vor dem Auftreffen auf den Detektor (14) nach Art eines Bandpasses selektiert,
dass das Werkstück (2) gegenüber dem Detektor (14) mit einer insbesondere konstanten Geschwindigkeit (V) bewegt wird und das Auslesen der lichtempfindlichen Zellen (22) der CCD-Zeile (18) mit einer Geschwindigkeit erfolgt, die proportional zur Geschwindigkeit (V) des Werkstücks (2) ist, wobei die CCD-Zeilenkamera (14a, 14b) in Bewegungsrichtung des Werkstücks (2) betrachtet wenigstens zwei nebeneinander liegende CCD-Zeilen (18.1, 18.2 bis 18.n) mit jeweils nacheinander auf einer Achse (24) angeordneten korrespondierenden lichtempfindlichen Zellen (22.1, 22.2 bis 22.n) umfasst, und die aus zueinander korrespondierenden lichtempfindlichen Zellen (22.1, 22.2 bis 22.n) der ersten und zweiten CCD-Zeilen (18.1, 18.2 bis 18.n) ausgelesenen Signalwerte miteinander addiert werden..

2. Verfahren nach Anspruch 1,
**dadurch gekennzeichnet, dass**
die Farbpigmente mit Licht in einem Wellenlängenbereich zwischen 300 nm und 480 nm anregbar sind, dass die Lichtquelle (6) Licht in einem Wellenlängenbereich zwischen 460 nm und 490 nm erzeugt, und dass der erste optische Interferenzfilter (12) einen Transmissionsbereich zwischen 380 nm und 480 nm besitzt.

3. Verfahren nach Anspruch 1,
**dadurch gekennzeichnet, dass**
die Farbpigmente Licht im Wellenlängenbereich zwischen 500 nm und 600nm emittieren, und dass der zweite optische Interferenzfilter (14) einen Transmissionsbereich zwischen 500 nm und 580 nm für das vom Werkstück (2) emittierte Licht besitzt.

4. Verfahren nach einem der vorhergehenden Ansprüche,
**dadurch gekennzeichnet, dass**
der erste optische Filter ein Interferenzfilter ist, und dass die Transmission des ersten optischen Filters (12) und/oder des zweiten optischen Filters (16; 116a, 116b) im Durchlassbereich größer 90 %, insbesondere größer 98% ist.

5. Verfahren nach einem der vorhergehenden Ansprüche,
**dadurch gekennzeichnet, dass**
die Lichtquelle (6) kontinuierlich betrieben wird.

6. Anordnung (1) zur Erkennung von Materialfehlern, insbesondere Rissen (4), in einem Werkstück (2), das mit einem Prüfmittel beaufschlagt wird, welches durch Licht anregbare Farbpigmente enthält, mit einer das Werkstück (2) mit Licht (10) bestrahlenden Lichtquelle (6), einem das vom Werkstück emittierte Licht erfassenden Detektor (14) der eine CCD-Zeilenkamera (14a, 14b) mit wenigsten einer CCD-Zeile (18) umfasst und einer die Signale des Detektors (14) zur Ermittlung der Materialfehler auswertenden elektronischen Auswerteinrichtung (20), zur Durchführung des Verfahrens nach einem der Ansprüche 1 bis 5, wobei der Lichtquelle (6) ein erster optischer Interferenzfilter (12) zugeordnet ist, welcher das von der Lichtquelle (6) ausgesandte Licht (10) vor dem Auftreffen auf das Werkstück (2) nach Art eines Bandpasses selektiert,
**dadurch gekennzeichnet, dass**
die Lichtquelle (6) mehrere nach Art einer Matrix angeordnete LEDs (8) umfasst, die bläuliches Licht (10) bevorzugt in einem Wellenlängenbereich zwischen 460 nm und 490 nm emittieren, dass dem Detektor (14) ein zweiter optischer Interferenzfilter (16) zugeordnet ist, welcher das vom Werkstück (2) emittierte Licht vor dem Auftreffen auf den Detektor (14) nach Art eines Bandpasses selektiert, dass das Werkstück (2) durch ein Transportmittel gegenüber dem Detektor (14) mit einer insbesondere konstanten Geschwindigkeit (V) bewegt wird und das Auslesen der lichtempfindlichen Zellen (22) der CCD-Zeile (18) mit einer Geschwindigkeit erfolgt, die proportional zur Geschwindigkeit (V) des Werkstücks (2) ist, wobei die CCD-Zeilenkamera (14a, 14b) in Bewegungsrichtung des Werkstücks (2) betrachtet wenigstens zwei nebeneinander liegende CCD-Zeilen (18.1, 18.2 bis 18.n) mit jeweils nacheinander auf einer Achse (24) angeordneten korrespondierenden lichtempfindlichen Zellen (22.1, 22.2 bis 22.n) umfasst, und die aus zueinander korrespondierenden lichtempfindlichen Zellen (22.1, 22.2 bis 22.n) der ersten und zweiten CCD-Zeilen (18.1, 18.2 bis 18.n) ausgelesenen Signalwerte durch einen Mikroprozessor oder elektronische Bauteile miteinander addiert werden.

7. Anordnung nach Anspruch 6,
**dadurch gekennzeichnet, dass**
die Farbpigmente Licht im Wellenlängenbereich zwischen 500 nm und 600 nm emittieren, und dass der zweite optische Interferenzfilter (16) einen Transmissionsbereich zwischen 500 nm und 580 nm für das vom Werkstück (2) emittierte Licht besitzt.

8. Anordnung nach einem der Ansprüche 6 oder 7,
**dadurch gekennzeichnet, dass**
dass jeder LED (8) ein erster optischer Interferenzfilter (12a) zugeordnet ist.

## Claims

1. Method for detecting material defects, in particular cracks (4), in a workpiece (2), whereby the workpiece (2) is exposed to a test agent which contains colour pigments to be excited by shortwave light (10) subsequently irradiating the workpiece (2) with shortwave light from a light source (6) and the light emitted from the workpiece (2) is acquired by a detector (14) which comprises a CCD line camera (14a, 14b) with at least one CCD line (18) and the signals from the detector (14) are evaluated by an electronic evaluation device (20) for determining the material defects, wherein a first optical interference filter (12) is assigned to the light source (6), said filter as a type of bandpass selecting the light (10) emitted by the light source (6) before the light impinges on the workpiece (2),
**characterised in that**
the light source (6) has a plurality of LEDs (8) disposed in a type of matrix wherein the plurality of LEDs emit bluish light (10) preferably in a wavelength range between 460 nm and 490 nm, that to the detector (14) is assigned a second optical interference filter (16) which as a type of bandpass selects the light emitted by the workpiece (2) before the light impinges on the detector (14),
that the workpiece (2) is moved relative to the detector (14) at a particularly constant speed (V) and the reading of the light-sensitive cells (22) of the CCD line (18) takes place at a speed which is proportional to the speed (V) of the workpiece (2), whereby the CCD line camera (14a, 14b), when viewed in a movement direction of the workpiece (2), is provided with at least two neighbouring CCD lines (18.1, 18.2 to 18.n) having corresponding light-sensitive cells (22.1, 22.2 to 22.n) disposed next to each other on an axis (24) and the signal values read from mutually corresponding light-sensitive cells (22.1, 22.2 to 22.n) of the first and second CCD lines (18.1, 18.2 to 18.n) are added together.

2. Method in accordance with claim 1,
**characterised in that**
the colour pigments can be excited with light in a wavelength range between 300 nm and 480 nm, that the light source (6) produces light in a wavelength range between 460 nm and 490 nm, and that the first optical interference filter (12) is provided with a transmission range between 380 nm and 480 nm.

3. Method in accordance with claim 1,
**characterised in that**
the colour pigments emit light in a wavelength range between 500 nm and 600 nm, and that the second optical interference filter (16) is provided with a transmission range between 500 nm and 580 nm for the light emitted by the workpiece (2).

4. Method in accordance with one of the previous claims,
**characterised in that**
the first optical filter is an interference filter and that the transmission of the first optical filter (12) and/or of the second optical filter (16; 116a, 116b) in the passband is above 90 %, in particular above 98 %.

5. Method in accordance with one of the previous claims,
**characterised in that**
the light source (6) is operated continuously.

6. Configuration (1) for detecting material defects, in particular cracks, in a workpiece (2) which is exposed to a test agent containing colour pigments to be excited by light, the configuration comprising a light source (6) irradiating the workpiece (2) with light (10), a detector (14) comprising a CCD line camera (14a, 14b) with at least one CCD line (18) which acquires light emitted by the workpiece, and an electronic evaluation device (20) evaluating signals from the detector (14) for determining the material defects, for carrying out the method according to claims 1 to 5, wherein a first optical interference filter (12) is assigned to the light source (6), said filter as a type of bandpass selecting the light (10) emitted by the light source (6) before the light impinges on the workpiece (2),
**characterised in that**
the light source (6) has a plurality of LEDs (8) disposed in a type of matrix wherein the plurality of LEDs emit bluish light (10) preferably in a wavelength range between 460 nm and 490 nm, that to the detector (14) is assigned a second optical interference filter (16) which as a type of bandpass selects the light emitted by the workpiece (2) before the light impinges on the detector (14),
that the workpiece (2) is moved relative to the detector (14) by a transportation means at a particularly constant speed (V) and the reading of the light-sensitive cells (22) of the CCD line (18) takes place at a speed which is proportional to the speed (V) of the workpiece (2), wherein the CCD line camera (14a, 14b), when viewed in a movement direction of the workpiece (2), is provided with at least two neighbouring CCD lines (18.1, 18.2 to 18.n) having corresponding light-sensitive cells (22.1, 22.2 to 22.n) disposed next to each other on an axis (24) and the signal values read from mutually corresponding light-sensitive cells (22.1, 22.2 to 22.n) of the first and second CCD lines (18.1, 18.2 to 18.n) are added together by a microprocessor or electronic components.

7. Configuration in accordance with claim 6,
**characterised in that**
the colour pigments emit light in a wavelength range between 500 nm and 600 nm, and that the second optical interference filter (16) is provided with a transmission range between 500 nm and 580 nm for the light emitted by the workpiece (2).

8. Configuration in accordance with one of the claims 6 or 7,
**characterised in that**
a first optical interference filter (12a) is assigned to each LED (8).

## Revendications

1. Procédé de détection de défauts de matériau, en particulier de fissures (4) dans une pièce (2), dans lequel la pièce (2) reçoit un produit de détection contenant des pigments colorants excitables par une lumière de faible longueur d'onde (10), la pièce (2) est ensuite exposée à une lumière de faible longueur d'onde d'une source de lumière (6) et la lumière émise par la pièce (2) est détectée par un détecteur (14) constitué d'une caméra à lignes CCD (14a, 14b) avec au moins une ligne CCD (18), et les signaux du détecteur (14) sont évalués par un dispositif d'évaluation électronique (20) pour détecter les défauts de matériau, à ladite source de lumière (6) étant associé un premier filtre optique d'interférence (12), lequel sélectionne la lumière (10) émise par la source de lumière (6), avant qu'elle ne rencontre la pièce (2), à la manière d'un passe-bande,
**caractérisé en ce que**
la source de lumière (6) comprend plusieurs LED (8) disposées à la manière d'une matrice, qui émettent une lumière bleutée (10), de préférence dans une gamme de longueurs d'ondes comprises entre 460 nm et 490 nm, **en ce qu'**un second filtre optique d'interférence (16) est associé au détecteur (14), lequel sélectionne la lumière émise par la pièce (2), avant qu'elle ne rencontre le détecteur (14), à la manière d'un passe-bande,
**en ce que** la pièce (2) est déplacée par rapport au détecteur (14) à une vitesse (V) notamment constante et **en ce que** l'extraction des cellules photosensibles (22) de la ligne CCD (18) est réalisée à une vitesse proportionnelle à la vitesse (V) de la pièce (2), la caméra à lignes CCD (14a, 14b) comprenant, vu dans le sens de déplacement de la pièce (2), au moins deux lignes CCD (18.1, 18.2 à 18.n) adjacentes avec des cellules photosensibles correspondantes (22.1, 22.2 à 22.n) placées l'une après l'autre sur un axe (24), et les valeurs de signaux extraites de cellules photosensibles correspondantes (22.1, 22.2 à 22.n) des première et seconde lignes CCD (18.1, 18.2 à 18.n) étant additionnées.

2. Procédé selon la revendication 1,
**caractérisé en ce que**
les pigments colorants sont excitables par une lumière dans une gamme de longueurs d'ondes comprises entre 300 nm et 480 nm, **en ce que** la source de lumière (6) produit une lumière dans une gamme de longueurs d'ondes comprises entre 460 nm et 490 nm, et **en ce que** le premier filtre optique d'interférence (12) possède une plage de transmission comprise entre 380 nm et 480 nm.

3. Procédé selon la revendication 1,
**caractérisé en ce que**
les pigments colorants émettent une lumière dans la gamme de longueurs d'ondes comprises entre 500 nm et 600 nm, et **en ce que** le second filtre optique d'interférence (14) possède une plage de transmission comprise entre 500 nm et 580 nm pour la lumière émise par la pièce (2).

4. Procédé selon l'une des revendications précédentes,
**caractérisé en ce que**
le premier filtre optique est un filtre d'interférence, et **en ce que** la transmission du premier filtre optique (12) et/ou du second filtre optique (16 ; 116a, 116b) en bande passante est supérieure à 90 %, en particulier supérieure à 98 %.

5. Procédé selon l'une des revendications précédentes,
**caractérisé en ce que**
la source de lumière (6) fonctionne en continu.

6. Système (1) de détection de défauts de matériau, en particulier de fissures (4), dans une-piéce (2) qui reçoit un produit de détection contenant des pigments colorants excitables par la lumière, comprenant une source de lumière (6) exposant la pièce (2) à une lumière (10), un détecteur (14) détectant la lumière émise par la pièce, constitué d'une caméra à lignes CCD (14a, 14b) avec au moins une ligne CCD (18), et un dispositif d'évaluation électronique (20) évaluant les signaux du détecteur (14) pour détecter les défauts de matériau, pour la mise en oeuvre du procédé selon l'une des revendications 1 à 5, à ladite source de lumière (6) étant associé un premier filtre optique d'interférence (12), lequel sélectionne la lumière (10) émise par la source de lumière (6), avant qu'elle ne rencontre la pièce (2), à la manière d'un passe-bande, **caractérisé en ce que**
la source de lumière (6) comprend plusieurs LED (8) disposées à la manière d'une matrice, qui émettent une lumière bleutée (10), de préférence dans une gamme de longueurs d'ondes comprises entre 460 nm et 490 nm, **en ce qu'**un second filtre optique d'interférence (16) est associé au détecteur (14), lequel sélectionne la lumière émise par la pièce (2), avant qu'elle ne rencontre le détecteur (14), à la manière d'un passe-bande, **en ce que** la pièce (2) est déplacée par un moyen de transport par rapport au détecteur (14) à une vitesse (V) notamment constante et **en ce que** l'extraction des cellules photosensibles (22) de la ligne CCD (18) est réalisée à une vitesse proportionnelle à la vitesse (V) de la pièce (2), la caméra à lignes CCD (14a, 14b) comprenant, vu dans le sens de déplacement de la pièce (2), au moins deux lignes CCD (18.1, 18.2 à 18.n) adjacentes avec des cellules photosensibles correspondantes (22.1, 22.2 à 22.n) placées l'une après l'autre sur un axe (24), et les valeurs de signaux extraites de cellules photosensibles correspondantes (22.1, 22.2 à 22.n) des première et seconde lignes CCD (18.1, 18.2 à 18.n) étant additionnées par un microprocesseur ou des composants électroniques.

7. Système selon la revendication 6,
**caractérisé en ce que**
les pigments colorants émettent une lumière dans la gamme de longueurs d'ondes comprises entre 500 nm et 600 nm, et **en ce que** le second filtre optique d'interférence (16) possède une plage de transmission comprise entre 500 nm et 580 nm pour la lumière émise par la pièce (2).

8. Système selon l'une des revendications 6 ou 7,
**caractérisé en ce que**
à chaque LED (8) est associé un premier filtre optique d'interférence (12a).
